(19) Europäisches Patentamt
European Patent Office
Office européen des brevets

(11) Publication number: **0 240 565**
**B1**

(12) # EUROPEAN PATENT SPECIFICATION

(45) Date of publication of patent specification: **09.01.91**

(51) Int. Cl.$^5$: **C 08 G 59/06**, C 08 G 59/32, C 08 G 81/00

(21) Application number: **86907030.0**

(22) Date of filing: **29.09.86**

(86) International application number: **PCT/US86/02035**

(87) International publication number: **WO 87/02043 09.04.87 Gazette 87/08**

(54) **EPOXY RESIN POWDER COATING COMPOSITION.**

(30) Priority: **27.09.85 CH 4200/85**

(43) Date of publication of application: **14.10.87 Bulletin 87/42**

(45) Publication of the grant of the patent: **09.01.91 Bulletin 91/02**

(84) Designated Contracting States: **AT BE CH DE FR GB IT LI NL SE**

(56) References cited:
**WO-A-86/01213**
**FR-A-2 402 683**
**US-A-4 251 426**
**US-A-4 251 594**
**US-A-4 526 940**
**US-A-4 552 814**

**PATENT ABSTRACTS OF JAPAN, vol. 9, no. 59 (C-270)1782r, 15th March 1985; & JP-A-59 193 970 (NIPPON PAINT K.K.) 02-11-1984**

(73) Proprietor: **THE DOW CHEMICAL COMPANY**
**2030 Dow Center Abbott Road P.O. Box 1967**
**Midland Michigan 48640-1967 (US)**

(72) Inventor: **HOLDEREGGER, Rolf**
**Reblaubenweg 4A**
**CH-8820 Wadenswil (CH)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 240 565 B1

## Description

The present invention relates to a powder coating composition containing a solid, multi-functional epoxy resin, is use for coating a substrate with the powder coating composition and to a coated substrate.

Epoxy resins have been known for a long time. For example, from US—A—4 251 594, epoxy resins prepared by reacting a glycidyl ether of a dihydric phenol with a dihydric phenolic compound are known. These resins are used as liquids or dissolved in a solvent for impregnating substrates for use in preparing electrical laminates.

EP—A—189480 which is a document according to Article 54(3) EPC, describes a method for preparing solid branched epoxy resins of higher functionality which can be employed in epoxy resin compositions for electrical laminates, structural adhesives, potting and molding compositions, civil engineering applications, reinforced plastics and protective coatings as well as maintenance paints. The epoxy resins are compounds of the formula

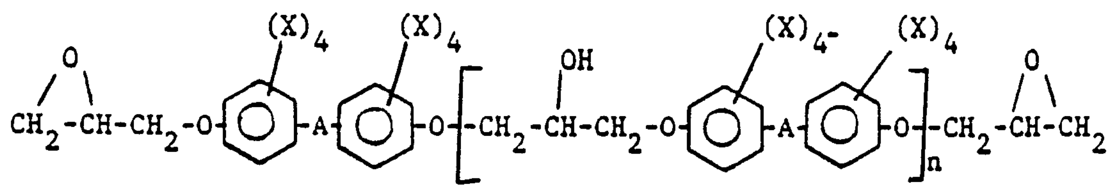 (I)

wherein each A is independently a divalent hydrocarbon group having from 1 to 8 carbon atoms, —CO—, —O—, —S—, —S—S—, —$S(O)_2$—, —S(O)— or a covalent bond; each X is independently hydrogen, halogen or an alkyl group of 1 to 4 carbon atoms and n has an average value of 0 to 35, preferably from 0 to 10; the value of n being primarily dependent on the degree of advancement of the resin and the diglycidyl ethers of polyglycols such as the diglycidyl ether of polypropylene glycol. Epoxy novolac resins are generally at an average epoxy functionality from 2.2 to 8 whereas the triglycidyl ethers of tris(phenol)methane have an average epoxy functionality of 3.

From US—A—4,526,940 a powder coating composition is known, comprising a solid multifunctional epoxy resin and a solid curing agent for the epoxy resin. Difunctional polyglycidyl ethers of a bisphenol compound or of a polyglycol, however, have a relatively long gel time and sometimes insufficient impact resistance or solvent resistance. Multifunctional epoxy resins as known from US—A—4,526,940 have a shorter gel time and usually better physical and chemical properties, but being much more expensive than difunctional epoxy resins.

Epoxy resin powder coating compositions are capable of being cross-linked by a variety of different cross-linking agents. The epoxy resins used for this purpose are mainly poly epoxides of the epichlorohydrin/bisphenol A type with, on the average, one to less than two 1,2-epoxy groups per molecule. Suitable curing agents are well known in the art. Examples are amines, acid anhydrides, boron trifluoride complexes, dicyandiamide, substituted dicyandiamides, phenolic resins as well as polyester resins. However, the cured coatings prepared from these epoxy resins do not possess the properties, such as impact resistance or solvent resistance, required for many applications.

One method for improving the chemical and physical properties of such coating composition consists of adding a polyfunctional epoxy resin, such as an epoxy novolac resin, to the epichlorohydrin/bisphenol A type resin. Epoxy novolac resins, which are commonly the reaction product of epichlorohydrin with the reaction product of a phenol and formaldehyde are conventionally prepared at an average epoxide functionality of from 2.2 to 8 epoxy groups per molecule. However, these polyfunctional epoxy compounds are relatively expensive. In addition, the reactivities of the epoxy groups of the epoxy novolac resins or other polyfunctional epoxy resins are often different from reactivities of the epoxy groups of more conventional epichlorohydrin/bisphenol A type resins. These differences in reactivity of the epoxy groups can cause embrittlement or other problems upon curing a blend containing the two resin types. Moreover, since the epoxy novolac resins presently used are liquid or semi-solid and the epichlorohydrin/bisphenol A type resins are solid under standard conditions (i.e., 20°C and 1 bar air pressure) these resins must be blended as a molten mass. This process is costly and time consuming and the semi-solid epoxy novolac resins are difficult to handle. Therefore, it would be highly desirable to prepare a powder composition for coating a substrate which composition does not have the above mentioned disadvantages.

This object is attained by a coating composition comprising

(a) a solid multifunctional epoxy resin of the formula I

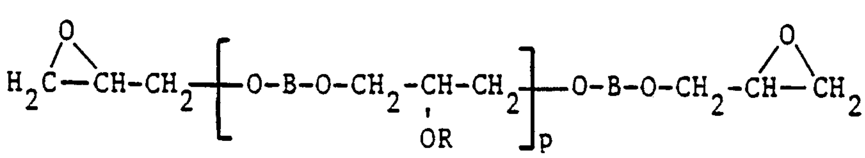 (I);

wherein R is independently, each occurrence, hydrogen or a group of formula II

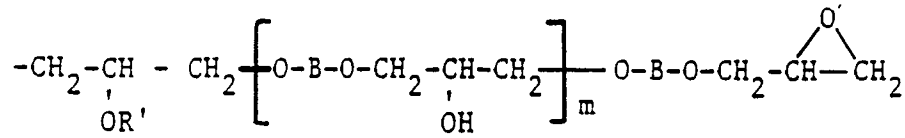 (II);

R′ has the meaning of R; each B is independently an aliphatic alkylene radical, a radical of formula

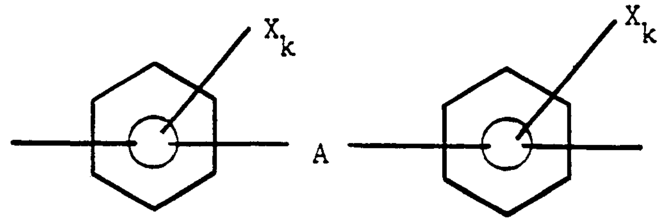 (VII);

or a polyglycol radical of a number average molecular weight from 100 to 4000; provided that at least a part of the radicals B are radicals of formula VII; each A is independently, each occurrence, a divalent hydrocarbon group having from 1 to 8 carbon atoms, —CO—, —O—, —S—, —S—S—, —$S(O)_2$—, —S(O)— or a covalent bond; X is independently, each occurrence, hydrogen, halogen or an alkyl group of 1 to 4 carbon atoms; p has an average value greater than 0 and up to 20, m has an average value of 0 up to 20, and k is a positive number from 1 to 4; provided that the average epoxide functionality per molecule of the epoxy, resin is greater than 2 and the epoxy resin is solid, or

(b) a mixture of different epoxy resins of formula I;

(c) a solid curing agent for the epoxy resin, characterized in that the composition is a powder coating composition.

The powder coating composition can comprise optional additives, for example accelerators, flow control agents, pigments and/or fillers. The powder compositions are used for coating a substrate, preferably a metal, glass, plastic or fiber reinforced plastic substrate.

One advantage of the powder compositions of the present invention is the short gel time compared to known compositions containing polyglyidyl ethers of bisphenol compounds or of polyglycols with an average epoxide functionality per molecule of two or less. Moreover, the cured coatings provided by the powder compositions of the present invention usually have good chemical and physical properties like high impact resistance, high solvent resistance, high flexibility and/or low brittleness. The powder compositions of the present invention do not require special processing or application equipment for applying the compositions to the substrate.

The compositions of the present invention can be prepared by blending the above mentioned solid, multifunctional epoxy resin(s), the solid curing agent(s) and optionally further additives, passing the mixture through an extruder and grinding the extrudate.

A further aspect of the present invention is the use of a powder coating composition of the present invention for coating a substrate. Preferably, the substrate is coated by electrostatic spraying or by using a fluidized bed which can also be electrostatic.

The present invention also relates to a substrate having a coating on at least one surface thereof, which coating consists essentially of the powder composition as described herein, after being cured.

As used herein, "multifunctional" epoxy resins refer to resins with an epoxide functionality per molecule of greater than two, meaning that the average number of 1,2-epoxy groups per resin molecule is greater than 2.

The "epoxy equivalent weight (EEW)" is the weight of the epoxy resin containing one equivalent of epoxy groups. It is measured by two standard titration methods.

The multifunctional epoxy resins, i.e., the multifunctional polyglycol ethers of bisphenol compounds and the multifunctional polyglycidyl ethers of polyglycols advanced in molecular weight with bisphenol compounds, are solids at room temperature and 1 bar air pressure. The above mentioned multifunctional polyglycidyl ethers of bisphenol compounds and of polyglycols are represented by the following formula:

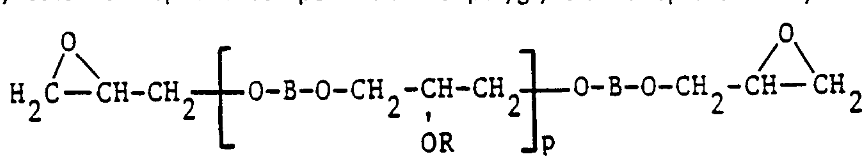 (I);

wherein R is independently, each occurrence, hydrogen or a radical of the formula II

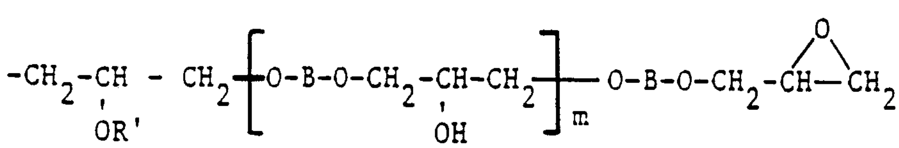 (II);

R′ has the meaning of R;

each B has independently an aliphatic alkyl radical or a polyglycol radical of a number of average molecular weight from 100 to 4000, preferably from 300 to 2000 or a radical of the formula

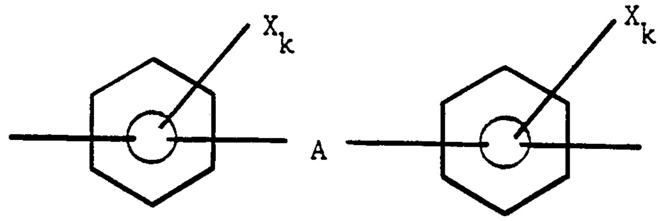

(VII);

provided that at least a part of the radicals B are radicals of VII;

each A is independently, each occurrence, a divalent hydrocarbon group having from 1 to 8 carbon atoms, —CO—, —O—, —S—, —S—S—, —$S(O)_2$—, —S(O)—, or a covalent bond;

X is independently, each occurrence, hydrogen, halogen or an alkyl group of 1 to 4 carbon atoms;

p has an average value of greater than 0 and up to 20, preferably of greater than 0 and up to 10; m has an average value of 0 up to 20, preferably of 0 up to 10; and k is a positive number from 1 to 4; provided that the average epoxide functionality per molecule of the epoxy resin is greater than 2 and the epoxy resin is a solid.

Preferably, the average values of each p and m are larger than 0.25, most preferably, larger than 0.5.

As stated above, each R is, in each occurrence, independently hydrogen or a radical of the formula II, provided that the average epoxide functionality per molecule of the epoxy resin is greater than 2. Therefore, at least some of the radicals R are not hydrogen.

In formula II, R′ represents hydrogen or the radical of formula II. This means that the individual branch(es) of the epoxy resin of formula I can themselves be branched.

The hydrogen atom of the hydroxy moiety in the group

$$-CH_2-\underset{\displaystyle OH}{\underset{|}{CH}}-CH_2-$$

in formula II can in principle also be substituted by a radical of formula II.

The numerical values of p and m and the meaning of R and R′ are chosen so that the average epoxide functionality per molecule is greater than 2 and the resin is a solid.

The multifunctional polyglycidyl ethers of bisphenol compounds and the multifunctional polyglycidyl ethers of polyglycols advanced in molecular weight with bisphenol compounds, i.e., the compounds of the formula I, have preferably an average epoxide functionality per molecule of at least 2.1, more preferably at least 2.3 and have preferably an average epoxide functionality per molecule of at most 5.0, more preferably, at most 3.5.

The epoxy resin can have any epoxy equivalent weight provided that the epoxy resin is solid prior to curing. Preferably, the epoxy equivalent weight of the described epoxy resins is greater than about 300, more preferably greater than about 500; and preferably less than about 2000, more preferably less than about 1200.

Preferred examples of multifunctional polyglycidyl ethers of polyglycols of formula I advanced in molecular weight with bisphenol compounds, are those wherein a part of the radicals B are a polyalkylene glycol radical, e.g., a polypropylene glycol radical represented by the formula

$$-(CH_2-\underset{\displaystyle CH_3}{\underset{|}{CH}}-O-)_n-CH_2-\underset{\displaystyle CH_3}{\underset{|}{CH}}-$$

wherein n is from 1 to 35, preferably from 1 to 20.

The epoxy resins which are preferred for the use of the present invention are those represented by formula I in which at least a part of the radicals B have a meaning of

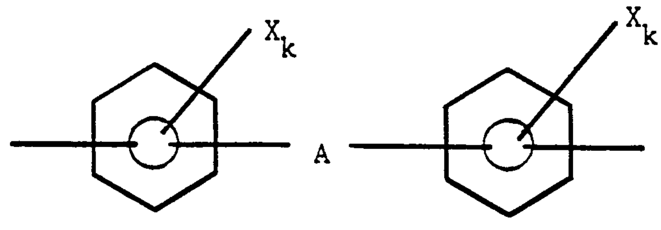

wherein A represents independently, each occurrence, a divalent hydrocarbon group having from 1 to 6 carbon atoms, most preferably a 2-propylidene radical, i.e., the radical presented by

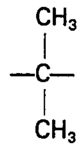

X is independently, each occurrence, hydrogen, bromine or chlorine; and k is as defined hereinbefore.

Preferably, the powder coating compositions of the present invention comprise the multifunctional polyglycidyl ethers of bisphenol compounds and/or the multifunctional polyglycidyl ethers of polyglycols advanced in molecular weight with bisphenol compounds in amounts of from 10 percent, more preferably from 20 percent to 95 percent, more preferably to 70 percent, by weight of the composition.

The epoxy resin component of the powder coating of the present invention can be prepared by branching the corresponding linear diglycidyl ethers of bisphenol compounds or the corresponding linear polyglycidyl ethers of polyglycols, e.g., as described in US—A—4,352,918 and 4,251,594.

The branching reaction, however, occurs preferably in the presence of an alkali compound, most preferably in the presence of a lithium or cesium compound.

Preferably, the method of preparing the epoxy resin component of the powder coating composition of the present invention comprises "advancing" an epoxy resin such as a diglycidyl ether of a bisphenol, of a diol or of a polyglycol of low molecular weight with a polyol such as, for example, with a bisphenol, in the presence of an "advancement" catalyst to prepare a higher molecular weight epoxy resin and, thereafter, branching the epoxy resin *in situ* using a lithium of cesium compound as the branching catalyst. Alternatively, the branching reaction may occur simultaneously with the advancement of the epoxy resin.

Advancement catalysts are well known in the art. Illustrative advancement catalysts which form higher molecular weight linear epoxy resins include the "onium" compounds such as quaternary ammonium compounds. Examples are quaternary ammonium hydroxides, as described in U.S.—A—4,168,331, e.g., tetramethylammonium hydroxide; quaternary ammonium salts and quaternary phosphonium salts, such as ethyltriphenylphosphonium iodide; and the tertiary amines and phosphines, e.g., benzyldimethylamine and triphenylphosphine. Of the advancement catalysts, the onium compounds and the tertiary amines are generally more advantageously employed. Advantageously, the advancement catalysts will be employed at about 150 to 2500 parts per million (ppm), by weight, based on the total weight parts of the epoxy resin and the co-reactive chain extender.

Preferred lithium compounds useful as branching catalysts are lithium halides such as lithium chloride or lithium bromide; lithium acetate, lithium nitrate, butyl lithium, lithium perchlorate, lithium naphthenate, lithium-p-toluene sulfonate, lithium phenolate, lithium bisphenolate, lithium methanolate, lithium amide, lithium sulfide or lithium hydride. Lithium and cesium hydroxide are also suitably employed as branching catalysts. Also, the halide salts of cesium and lithium which are formed by reaction with the aliphatic halide present in the reaction mixture during the branching reactions are effective branching catalysts. The preferred lithium compounds are lithium chloride and lithium phenolate, with lithium chloride being the most preferred lithium salt.

The lithium or cesium branching catalyst can be added prior to or subsequent to the advancement of the epoxy resin. The lithium or cesium salts are preferably added only after advancement if the particular salt is soluble in the advanced epoxy resin. Lithium and cesium salts, which are insoluble in the advanced reaction mixture but soluble in the reactant mixture, e.g., LiOH, are suitably added to the reaction mixture prior to advancement of the epoxy resin. The lithium or cesium compound is employed in a catalytically effective amount. Advantageously, more than 0.1, preferably more than 1 and less than 100, preferably less than 30, ppm are employed based on the amount by weight of the epoxy resin components in the branching reaction.

Preferably, the advancement and/or branching reaction is conducted in the absence of a reaction diluent. In general, the branching reaction is advantageously conducted at temperatures above 20°C, preferably above 140°C, and below 250°C, preferably below 200°C.

Upon obtaining the desired amounts of branching, the reaction is most effectively terminated by the addition of a material which acts to stop the branching reaction. A particularly preferred method of preparation comprises branching an epoxy resin using a lithium compound as a branching catalyst and there after terminating the branching reaction by adding a deactivating agent such as a strong acid, (i.e. an acid having pKa of less than 2.5 at 25°C), e.g., inorganic acids such as phosphoric acid, sulfurous acid or sulfuric acid; inorganic acid esters; half esters and partial esters such as dimethylsulfate and monomethyl sulfate; inorganic acid anhydrides such as phosphoric acid anhydrides ($P_2O_5$ or $P_4O_{10}$); strong organic acids, their esters and anhydrides, e.g., the alkyl and aralkyl sulfonic or sulfenic acids such as p-toluene sulfonic acid anhydride. Of the foregoing compounds, those preferably employed as deactivators herein include the alkyl, aryl and aralkyl sulfonic acids and the alkyl, aryl and aralkyl sulfonates. Most preferred are methyl-p-toluene sulfonate and p-toluene sulfonic acid. Preferably, the deactivator is added in an amount of at least 1 to less than 3 equivalents for each equivalent of the branching catalyst.

For the curing of the epoxy resins described above, curing or cross-linking agents ("hardeners") well known in the art are useful. The compositions of the present invention contain solid curing agents, for example, amines, acid anhydrides, boron trifluoride complexes, dicyandiamide, substituted dicyandiamides, polyester resins, and phenolic hardeners.

Another class of curing agents well known in the art comprises prereacted adducts of epoxy resins with amines or anhydrides or dicyandiamide or phenolic resins.

One particular class of phenolic hardeners useful for the powder coating composition of the invention is the reaction product of A) an excess of a phenolic compound having on the average more than one phenolic —OH group per molecule with B) an epoxy compound having on the average more than one 1,2-epoxy group per molecule.

The phenolic compound A) advantageously employed in preparing the phenolic hardener is a normally solid material and includes phenolic compounds represented by the following general formulas III and IV:

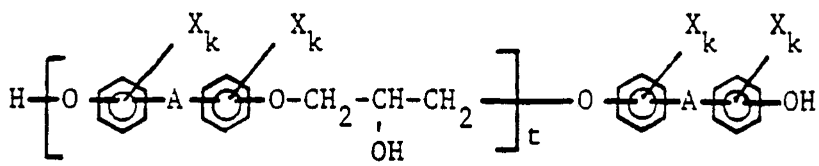
(III);

wherein A, and k are as defined in the description of formula I and t has an average value of 0 to 5, preferably from 0 to 2, and

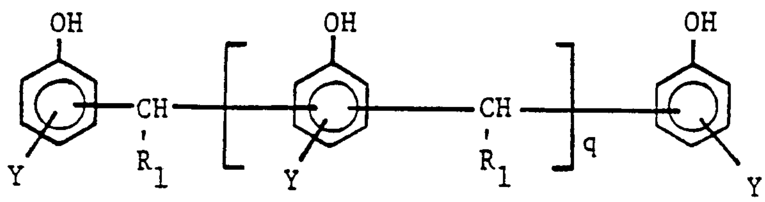
(IV);

(commonly referred to as a novolac resin) wherein each $R_1$ is individually hydrogen or an alkyl radical having from 1 to 4 carbon atoms, each Y is an independently hydrogen, chlorine, bromine or a lower alkyl group of 1 to 6 carbon atoms and has an average value from 0 to 10. Mixtures of different phenolic compounds are also suitably employed herein.

Preferably, the phenolic compound A) employed for preparing the phenolic hardener is a polyhydric phenolic compound of the general structural formula III wherein A is a divalent hydrocarbon radical having from 1 to 8 carbon atoms, X in each occurrence is hydrogen; and t is 0. Most preferred of the polhydric phenolic compound is 2,2-bis(4-hydroxyphenyl)propane, commonly referred to as bisphenol A.

In general, the epoxy compound B) used for preparing the phenolic hardener is saturated or unsaturated aliphatic, cycloaliphatic, aromatic or unsaturated aliphatic, cycloaliphatic, aromatic or heterocyclic and can be substituted with one or more non-interfering substituents such as halogen atoms, groups containing phosphorous atoms, hydroxyl groups, alkyl and alkoxy radicals. The epoxy compound B) can be monomeric or polymeric.

Illustrative examples of expoxy compounds B) useful herein are described in The Handbook of Epoxy Resins by H. L. Lee and K. Neville, published in 1967 by McGraw-Hill, New York, in appendix 4—1, pages 4—35 through 4—56.

Epoxy compounds B) of particular interest in the practice of this embodiment include the polyglycidyl ethers of bisphenol compounds represented by the general structure formula:

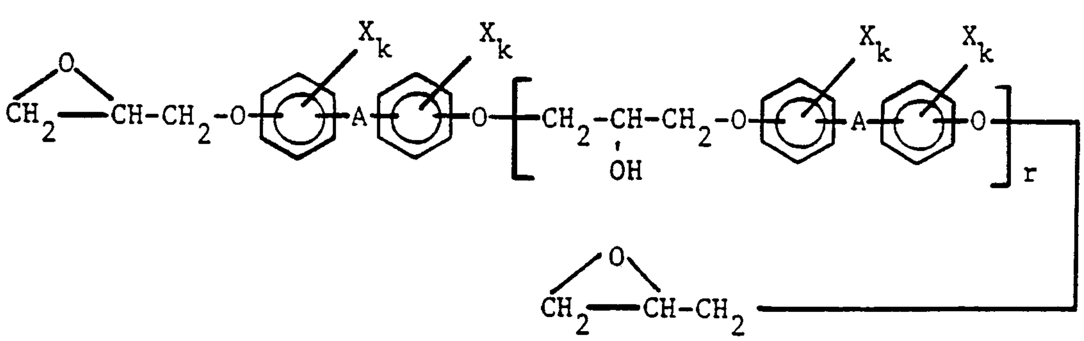
(V);

wherein A, X and k are as defined above in formula I and r has an average value of 0 to 0.5; or the polyglycidyl ethers of a novolac resin, i.e. phenol aldehyde condensates of the formula:

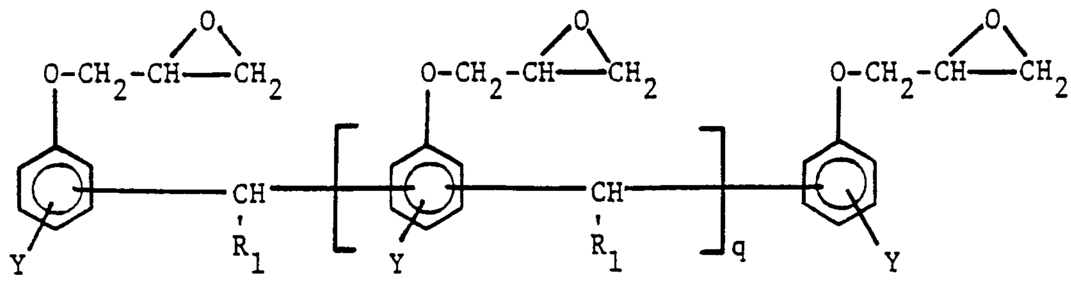

(VI);

wherein $R_1$, Y and q are defined as above with reference to formula IV;

or polyglycidyl ethers of a polyglycol such as diglycidyl ether of polypropylene glycol or the polyglycidyl ethers of tris(phenol) methane. Mixtures of several phenoxy compounds are also suitably employed herein.

Preferred epoxy compounds B) are the polyglycidyl ethers of bis-phenol compounds of formula (V) wherein each A is independently a divalent hydrocarbon group having from 1 to 6 carbon atoms, X in each occurrence is independently hydrogen or bromine and r has an average value of from 0 to 0.25, and also the polyglycidyl ethers of a novolac resin of formula VI wherein $R_1$ is hydrogen or methyl, each Y is hydrogen or methyl and q has an average value of from 0 to 3 and mixtures thereof. Most preferred as an epoxy compound B) is the liquid diglycidyl ether of bisphenol A.

When preparing the phenolic hardeners, the phenolic compounds A) described above are employed in a stoichiometric excess when compared to the epoxy compounds B) described above. Advantageously, at least 1.2 equivalents of the phenolic compound A) are employed for each equivalent of epoxy compound B). Preferably, at least 1.5, more preferably at least 2, and preferably not more than 15, more preferably not more than 10, equivalents of the phenolic compound A) are employed per equivalent of epoxy compound B). Most preferably, the phenolic compound A) is employed in an amount from 2 to 5 equivalents for each equivalent of epoxy compound B) employed.

The most preferred phenolic hardeners employed in the powder coating composition of the present invention are the reaction products of A) the phenolic compound and B) the epoxy compound described above which have additionally been reacted with C) a compound containing at least one primary or secondary amino group and at least one aliphatic hydroxyl group (hereafter "aliphatic hydroxyl containing amine"). This reaction product (hereafter "modified phenolic hardener") of A) the phenolic compound, B) the epoxy compound and C) the aliphatic hydroxyl containing amine has terminal aliphatic —OH groups and phenolic —OH groups.

By the term "aliphatic hydroxyl group" it is meant that the oxygen atom of the hydroxyl group is not attached directly to an aryl substituent. For example, the hydroxyl group of phenol is not an aliphatic hydoxyl group whereas the hydroxyl group of benzyl alcohol is considered an aliphatic hydroxyl group.

Representative examples of aliphatic hydroxyl containing amines are the monoamines having two alkanol substituted groups (dialkanol amines) such as diethanol amine, dipropanol amine and ethanol propanol amine; monoamines having one alkanol substituent such as ethanol amine and monoamines having one alkanol substituent and one other substituent group such as ethyl ethanol amine, methyl ethanol amine and benzylethanol amine and polyamines such as N,N'-di(hydroxyethyl)ethylenediamine. Preferred of the aliphatic —OH containing amines are the secondary monoamines. More preferably, the aliphatic —OH containing amine is a dialkanol monoamine, with diethanolamine being most preferred.

In general, in preparing the above mentioned modified phenolic hardener, the aliphatic —OH containing amine component C) is employed in an amount from 0.03 to 0.8, preferably from 0.08 to 0.4, equivalents per equivalent of epoxy compound B). An equivalent of the aliphatic hydroxyl containing amine C) as defined herein is determined by the number of hydrogen atoms attached directly to the nitrogen atoms of the amine group which are capable of reacting with the epoxy compound. In other words, where X is the equivalent of B), generally 0.03 X to 0.8 X equivalents of C) are used.

When producing the modified phenolic hardener, a stoichiometric excess of the phenolic compound A) when compared to the epoxy compound B) set forth above is employed. As set forth above, 1.2 to 15 equivalents of the phenolic compound A) are generally used per equivalent of epoxy compound B). However, in determining the equivalents of phenolic compound A) and epoxy compound B) to be employed, it is necessary to take into consideration the fact that the aliphatic —OH containing amine C) will react with the epoxy groups of the epoxy compound B) to reduce the epoxide functionality. Taking the equivalents of C) into consideration, the equivalents of the epoxy compound B) not having reacted with C) are (X—0.03) to (X—0.8). Accordingly the equivalents of A) generally employed is (1.2 to 15)·[(X—0.03) to (X—0.8)].

A particularly preferred modified phenolic hardener containing terminal aliphatic —OH groups and phenolic —OH groups is prepared using A) from 90 to 35 weight percent of the bisphenol A, B) from 10 to 55 weight percent of the diglycidyl ether of bis-phenol A, and C) from 1 to 10 weight percent of the aliphatic hydroxyl containing amine, preferably diethanolamine.

The modified phenolic hardeners which are useful in the coating composition of the present invention are solids.

The phenolic hardeners and modified phenolic hardeners can be prepared by mixing the desired amounts of the phenolic compound A), the epoxy compound B) and optionally the aliphatic hydroxyl containing amine C) and heating the mixture, generally to a temperature of 100 to 250°C.

When preparing the phenolic hardeners, a catalyst can be used for promoting the reaction of the epoxy groups with the phenolic groups. Such catalysts are known in the art. The use of a catalyst, however, is generally not required, when the aliphatic hydroxyl containing amine C) which can itself act as a catalyst for the reaction between the epoxy and the phenolic groups is present.

The described preferred powder coating compositions which contain the described solid epoxy resins and the described preferred (modified) phenolic hardeners exhibit good adhesion when applied to a metal substrate, including a steel substrate. Although the powder coating composition of the present invention is particularly advantageous when applied to a steel substrate, it can also suitably be employed with other metallic substrates as well as substrates of other materials, including plastic or glass, which will withstand temperatures greater than 100°C.

Also a mixture of curing agents can be used. Generally, suitable amounts of curing agents are from 2 to 90, preferably from 2 to 40 percent, based upon the total weight of the powder composition. For example, dicyandiamide or substituted dicyandiamides are generally used in amounts of 1 to 10, preferably 2 to 5 percent by weight, based upon the total weight of the powder composition.

Phenolic hardeners are generally used in amounts of more than 2, preferably more than 10 and less than 50, preferably less than 40 percent by weight, based on the total weight of the powder composition.

Linear or branched carboxyl-terminated solid polyester resins can be used as co-resins and as curing agents epoxy resins described above. These polyester resins are generally used in amounts of more than 20, preferably more than 30, and less than 80, preferably less than 75 percent by weight, of the total powder composition.

Generally, the most preferred weight ratio between epoxy resin and curing agent comprised in the coating composition of the invention depends on a variety of factors, e.g., on the type of the epoxy resin and the curing agent, on the desired properties of the coating composition and on the type and amount of optional additives used.

In preparing a powder coating composition of the invention the solid epoxy resin described herein and the solid curing agent for the epoxy resin are preferably employed in amounts such that the powder coating composition contains from 45 to 95, preferably from 60 to 90, weight percent of the epoxy resin and from 25 to 5, preferably from 40 to 10, weight percent of the curing agent, said weight percents being based on the total weight of the solid curing agent and solid epoxy resin employed.

In general, the equivalents ratio between epoxy groups in the resin and reactive groups in the curing agent is from 2:1 to 1:2, preferably from 1.5:1 to 1:1.2.

The most preferred molar ratio between epoxy groups and active hydrogen groups for the specific type and use of the coating composition can be determined by those ordinary skilled in the art.

Optionally, accelerators or catalysts for promoting the reaction between the epoxy resin and the curing agent are used in preparing the powder coating compositions. Suitable accelerators include, for example, quaternary ammonium compounds, quaternary phosphonium compounds, oxazines, oxazolines, imidazoles and imidazolines which are well known in the art. Catalysts are preferably employed in an amount of more than 0.01 percent, more preferably more than 0.05 percent; and preferably less than 1.0 percent, more preferably less than 0.8 percent by weight, based upon the total weight of the powder coating composition. In the practice of the present invention the catalysts or accelerators are often premixed with the curing agent or with the epoxy resin.

Optionally, the powder coating composition may contain several adjuncts, e.g., flow control agents, additives for improving the handling properties, pigments or fillers. These adjuncts are well known in the art.

For example, if desired, flow control agents can be added to the powder coating composition of this invention, preferably in amounts of 0.01 to 1.0 weight percent, based upon the total weight of the powder coating composition. Typical flow control agents are polyacrylates, such as poly-2-ethylhexyl acrylate, finely divided ethyl cellulose, and siloxanes, such as dimethyl polysiloxanes or methyl phenyl polysiloxanes. Benzoin can also be used in order to improve the flow of the coating.

To improve the handling properties of the powder coating composition and to prevent caking, finely divided silica, generally in the amounts of more than 0.05 percent, preferably more than 0.1 percent and less than 5.0 percent, preferably less than 3.0 percent, by weight of the powder coating composition can be added. The silica can be blended with with epoxy resin with the curing agent and/or the catalyst.

The powder coating composition can contain pigments. Any of the conventional inorganic or organic pigments, filler pigments, or dyes can be used. Examples of the great variety of usable pigments include: metallic oxides, such as titanium dioxide, zinc oxide, and iron oxide; metallic flakes such as alumium flake; metallic powders; metal hydroxides; sulfides; sulfates; carbonates; carbon black; silica; talc; china clay; and other extender pigments. Preferably, the powder coating composition contains more than 5 percent, most preferably more than 10 percent, and less than 60 percent, most preferably less than 40 percent, by weight of the pigment.

The application of the powder coating composition to a substrate can be done by spraying or dipping the substrate into a fluidized powder coating composition.

Generally, electrostatic spraying equipment is used in which a voltage of 20 to 100 kilovolts is applied to the spray gun. The composition can be applied to a cold or to a preheatd substrate in one pass or several passes to provide variable coating thickness, after cure, of preferably 0.01 to 0.70 mm. For protective applications like pipe coatings, the coating thickness after curing is most preferably from 0.15 to 0.7 mm. For standard decorative applications a coating thickness of 0.04 to 0.10 mm is particularly preferred.

The powder coating composition can be advantageously applied directly to metals such as aluminum or steel. The coating composition can also be applied to a suitably treated or primed metal substrate. The composition can be sprayed directly on galvanized, phosphatized or chromated steel or chromated aluminium to form a durable coating.

After the application of the powder, the coated article is preferably subjected to a temperature of 100°C to 350°C, most preferably to 140°0C to 300°C, for about 1 to 30 minutes to fuse and to cure the powder particles into a substantially continuous uniform coating.

When pipes are coated, the coating is generally applied to preheated pipes which preferably have a temperature of between about 150°C and about 300°C. Accordingly, the melt-viscosity of the composition should be high enough to prevent sagging of the sprayed composition. A small amount of additives which raise the melt-viscosity of the composition, e.g., a small amount of a higher molecular weight (3000 or more) epoxy resin can optionally be added to obtain the desired properties of the powder composition used for coating pipes. The residual heat of the pipe is generally sufficient to fully cure the coating.

Typical applications for decorative epoxy coatings include, for example, office furniture, bicycle frames, hot-water radiators, toys and tools, road signs and other metallic substrates. Protective epoxy powder compositions are applied, for example, to pipes, automotive chassis, farm machinery, fences and tanks.

The following examples illustrate the invention and should not be construed to limit the scope. In the examples, all parts and percentages are by weight unless otherwise indicated.

A) Preparation of a multifunctional epoxy resin A

To a suitably sized reaction vessel equipped with a temperature control means, stirring device and nitrogen sparger, were added 800 parts of a mixture containing 606.1 parts of a diglycidyl ether of bisphenol A (epoxy equivalent weight (EEW) of 180) and 193.9 parts of bisphenol A. The reaction vessel was then heated to 95°C. When the contents of the reaction vessel obtained this temperature, 0.2 part of a 70 percent solution of ethyltriphenyl phosphonium acetate advancement catalyst in methanol and 0.16 part of a 10 percent solution of LiOH branching catalyst in water were added to the reaction vessel. The active amount of advancement catalyst was 175 parts per million parts of the epoxy resin. The active amount of the LiOH branching catalyst was 20 parts per million parts of the epoxy resin. The resulting reaction mixture which contained both the advancement and branching catalyst was heated to 150°C. At this temperature, the reaction mixture was found to exotherm, with the exotherm temperature being between 180 and 200°C. The temperature of the reaction mixture was maintained at 180°C after the exotherm has been passed.

When the EEW reached the desired EEW of 590, which occurred about 2.25 hours after the initial exotherm, 0.16 part of methyl-p-toluene sulfonate was added, in one shot, to the reaction mixture. The reaction mixture was maintained at 180°C for thirty minutes to allow the deactivator to be homogeneously mixed throughout the reaction mixture and sufficiently deactivate the catalyst and to terminate the branching chain propagation. Subsequent to this treatment, the reaction mixture was found to be stabilized and was flaked using conventional techniques.

The resulting branched epoxy resin has an average epoxide functionality of about 2.6, a melt viscosity, at 150°C, of 2,76 Pa's (27.6 poise), a softening point of 93.1°C and glass transition temperature of 48°C.

B) Preparation of a preferred phenolic hardener B

To a suitably sized glass vessel equipped with stirrer, heating mantle, temperature control means and nitrogen purge, were charged 37.9 parts of a commercially available diglycidyl ether of bisphenol A (0.203 equivalent), 53.1 parts of bisphenol A (0.465 equivalent) and 5 parts of diethanol amine (0.048 equivalent). This reaction mixture was heated to 150°C and allowed to exotherm. The reaction was allowed to proceed for an additional 90 minutes to assure that the reaction product contained essentially no residual epoxy groups. At this time, the reaction mixture was cooled to less than 140°C. Subsequently, 2 parts of 2-methylimidazole and 2 parts of a flow control agent were mixed into the reaction product. It was then cooled to room temperature and flaked.

Preparation of the powder coating compositions

Example 1

30.0 parts of the multifunctional epoxy resin A prepared as described above; 36.0 parts of a polyester resin which is employed as a curing agent and which is commercially available from SCADO Netherlands under the designation Uralac® P2127; 32.5 parts of a titanium dioxide pigment; 0.5 part benzoin; and 1.0 part of a polyacrylate flow control agent which is commercially available from Worlee-Chemie GmbH under the description Resiflow® PV 5 were mixed, the mixture was extruded on a Buss PR46 type extruder at

120°C and the extrudate was ground and sieved to a particle size of less than 120 µm. Then the formulation was electrostatically sprayed at a voltage of 40 to 100 kilovolts, onto 0.6 mm thick, degreased, unheated steel panels of the dimension 15 cm by 7 cm and cured at 180°C.

Example 2

A powder coating composition was prepared in the same manner as in Example 1 except that 15.5 parts of the multifunctional epoxy resin A and 50.5 parts of a polyester resin which is commercially available from SCADO Netherlands under the designation Uralac® P 2450 were employed.

Example 3

43.0 parts of the multifunctional epoxy resin A prepared as described above; 17.0 parts of a phenolic curing agent, commercially available as D.E.H. (Trademark of The Dow Chemical Company) 81 curing agent; and 40.0 parts of a titanium dioxide pigment were mixed and the mixture was extruded on a Buss PR 46 type extruder at 86°C. The treatment of the extrudate and the application of the coating formulation to the substrate was the same as in Example 1.

In Table I some physical and chemical properties of the coatings prepared from the coating compositions of Exmples 1 to 3 are listed.

TABLE I

| | Examples | | |
|---|---|---|---|
| | 1 | 2 | 3 |
| Gel time (sec.) at 180°C | 105 | 145 | 47 |
| Stoving temperature (°C) | 180 | 180 | 180 |
| Stoving time (min.) | 25 | 25 | 4 |
| Thickness (µm) | 55 | 60 | 55 |
| Flow | good | good | fair |
| Gloss (60° angle) | 87% | 76% | good |
| Impact front/reverse (inc·lbs) m·kg | (160/160) 1.84/1.84 | (<60) 0.69 | (160/160) 1.84/1.84 |
| Erichsen flexibility (mm) | 10.7 | 11.4 | 9.5 |
| Adhesion | v. good | v. good | fair |
| Acetone rubs | 18 | 2 | 10 |

The gel time is measured according to DIN 55990—8. The properties of the cured coating are measured as follows:

| | |
|---|---|
| Gloss (60° angle) | DIN 67530 |
| Front/reverse impact | ASTM D—2794—69 |
| Erichsen flexibility | DIN 53156 |
| Adhesion | DIN 53151 |

The acetone rub test measures solvent resistance. For this test a wad of cotton-wool soaked with acetone is used. The wad of cotton-wool is passed over the surface of the coating. The number of passes required until the coating turns matt or turbid is counted.

Coatings containing epoxy resin A in an amount of more than 25 percent by weight, based on the total weight of the coating composition are more solvent resistant and generally also more resistant to impact than those containing less than 20 percent by weight of epoxy resin A. Therefore, the powder coating compositions of the present invention most preferably contain more than 25 percent by weight of the solid multifunctional epoxy resin having an average epoxide functionality per molecule of greater than two. Examples 1 to 3 illustrate that the coating compositions are useful for decorative applications.

Example 4

49.0 parts of the multifunctional epoxy resin A prepared as described above; 10.5 parts D.E.H. (Trademark of The Dow Chemical Company) 81 curing agent; 10.5 parts D.E.H. (Trademark of The Dow Chemical Company) 82 curing agent; 12.0 parts of a red iron oxide pigment; 15.0 parts of a barium sulphate filler; and 3.0 parts of a finely divided silica which is commercially available from Degussa under the designation Aerosil® 972—R were mixed, the mixture was extruded on a Buss PR 46 type extruder at 85°C±2°C and the extrudate was flaked, ground and sieved to a particle size of less than 120 μm. Then the formulation was electrostatically sprayed at a voltage of 40—100 kilovolts onto 6 mm thick, blast cleaned steel panels preheated to 235°C of the dimensions 15 cm by 7 cm.

Example 5

A powder coating composition was prepared and applied to steel panels in the same manner as in Example 4 except that 50.0 parts of the multifunctional epoxy resin A, 10.0 parts D.E.H. (Trademark of The Dow Chemical Company) 81 phenolic curing agent and 10.0 parts D.E.H. (Trademark of The Dow Chemical Company) 82 phenolic curing agent were employed instead of the amounts of resin and hardeners in Example 4.

Example 6

50.0 parts of the multifunctional epoxy resin A; and 20.0 parts of the phenolic curing agent B), both prepared as described above; 12.0 parts of a red iron oxide pigment; 15.0 parts of a barium sulphate filler; and 3.0 parts of a finely divided silica which is commercially available from Degussa under the designation Aerosil® 972—R were mixed. The extrusion of the mixture, the preparation and application of the powder coating composition took place as in Example 4.

Comparative Example

42.5 parts and 6.5 parts of epoxy resins which are commercially available as D.E.R. (Trademark of The Dow Chemical Company) 642U epoxy resin and D.E.R. (Trademark of The Dow Chemical Company) 672U epoxy resin respectively, and which are both novolac modified solid reaction products of epichloro-hydrin and bisphenol A, and the same amounts and types of hardeners and additional adjuncts as employed in Example 4 were mixed. The mixture was treated and applied to steel panels as in Example 4. The mixture of the comparative Example is one of the best presently commercially available.

In Table II, some physical and chemical properties of the coatings prepared from the coating compositions of Examples 4 to 6 and the comparative example are listed.

TABLE II

| | Examples | | | Comparative Example |
|---|---|---|---|---|
| | 4 | 5 | 6 | |
| Thickness (microns) | 350—400 | 350—400 | 350—400 | 350—400 |
| Gel time (sec.) at 180°C | 36 | 48 | 40 | 43 |
| Application temp. (°C) (substrate) | 235 | 235 | 235 | 235 |
| Post cure (min.) at 235°C | 3 | 3 | 3 | 3 |
| Immpact resistance (inch-pounds) m·kg | (76) 0.87 | (32) 0.37 | (44) 0.51 | (40) 0.46 |
| Flexibility | >110° | >110° | >110° | 80° |
| Cathodic disbondment 28 days at room temp. (mm) | 8.3 | 3.5 | 3.5 | 6.2 |
| 7 days at 50°C (mm) | 5.8 | 4.5 | 3.3 | 6.7 |

The gel time and the impact resistance were measured as in Examples 1 to 3.

The flexibility was measured by bending the steel plate over a mandrel of 30 mm. The angles listed in Table II are the maximal angles of bend at which the coating is still intact.

The cathodic disbondment was measured by drilling a hole of 2.5 mm diameter through the coating to the steel panel, putting the panel into a 3 weight percent NaCl solution and applying a potential of 6 volts.

Examples 4 and 5 illustrate that by varying the ratio between epoxy resin and hardener the properties of the coating can be adjusted to give the desired balance of properties for the specific application. The coating composition of Example 6 provides an excellent balance of impact resistance and resistance to cathodic disbondment.

The comparative example also provides good impact resistance and resistance to cathodic disbondment. However, the flexibility of the coatings of Example 4 to 6 is considerably better than of the comparative example.

The powder coatings of Example 4 to 6 are useful as protective coatings, e.g. for the protection of pipes.

**Claims**

1. A coating composition comprising

(a) a solid multifunctional epoxy resin of the formula I

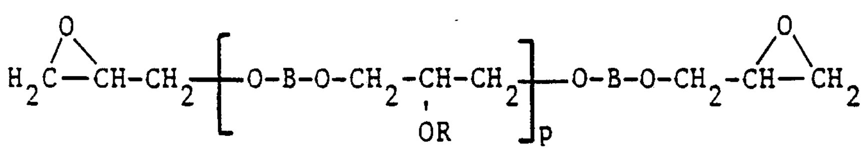

(I);

wherein R is independently, each occurrence, hydrogen or a group of formula II

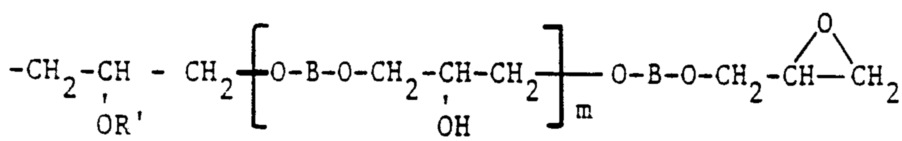

(II);

R′ has the meaning of R; each B is independently an aliphatic alkylene radical, a radical of formula

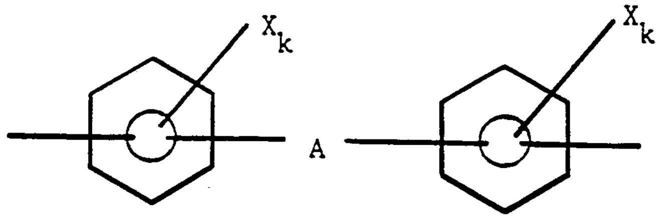

(VII);

or a polyglycol radical of a number average molecular weight from 100 to 4000; provided that at least a part of the radicals B are radicals of formula VII; each A is independently, each ocurrence, a divalent hydrocarbon group having from 1 to 8 carbon atoms, —CO—, —O—, —S—, —S—S—, $—S(O)_2—$, —S(O)— or a covalent bond; X is independently, each occurrence, hydrogen, halogen or an alkyl group of 1 to 4 carbon atoms; p has an average value greater than 0 and up to 20, m has an average value of 0 up to 20, and k is a positive number from 1 to 4; provided that the average epoxide functionality per molecule of the epoxy resin is greater than 2 and the epoxy resin is solid, or

(b) a mixture of different epoxy resins of formula I;

(c) a solid curing agent for the epoxy resin, characterized in that the composition is a powder coating composition.

2. The composition of Claim 1 wherein the epoxy resin is a solid multifunctional resin of formula I wherein at least a part of the radicals B are represented by formula

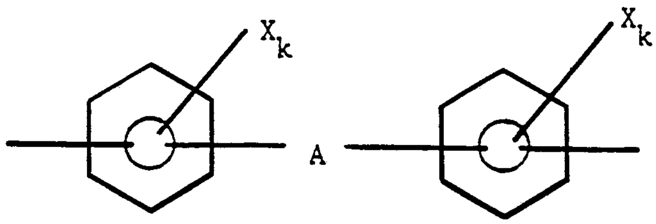

(VII);

wherein A is independently, each occurrence, a divalent hydrocarbon group having from 1 to 6 carbon atoms; X is independently, each occurrence, hydrogen, bromine or chlorine, k is a positive number from 1 to 4 and the epoxy resin has an average epoxide functionality per molecule of 2.1 to 5.0.

3. The composition of Claim 2 wherein the epoxy resin is a multifunctional resin of Formula I wherein, in the radicals B, each A is a 2-propylidene radical and X in each occurrence is hydrogen and the epoxy resin has an average epoxide functionality of 2.3 to 3.5.

4. The composition of any of Claims 1 to 3 wherein the solid multifunctional epoxy resin which has been branched in the presence of an alkali compound, preferably a lithium or cesium compound.

5. The composition of any of Claims 1 to 4 wherein the solid curing agent for the epoxy resin is the reaction product of A) an excess of a phenolic compound having on the average more than one phenolic —OH group per molecule with B) an epoxy compound having on the average more than one 1,2-epoxy group per molecule.

6. The composition of any of Claims 1 to 4 wherein the solid curing agent for the epoxy is the reaction product of A) a phenolic compound having on the average more than one phenolic —OH group, B) an epoxy compound having on the average more than one 1,2-epoxy group and C) a compound containing at least one primary or secondary amino group and at least one aliphatic hydroxyl group, said reaction product having terminal aliphatic —OH groups and phenolic —OH groups.

7. The composition of Claim 6 wherein the solid curing agent is prepared by reacting with each equivalent of the epoxy compound from 0.03 to 0.8 equivalents of a compound C) containing at least one primary or secondary amino group and at least one aliphatic hydroxyl group, and by using at least 1.2 equivalents, of a phenolic compound A), for each equivalent of the epoxy compound B) being in excess of the stoichiometric amount required for reacting with amino hydrogens of the compound C).

8. The composition of Claim 6 or 7 wherein the solid curing agent is the reaction product of A) from 90 to 35 weight percent of bisphenol A, B) from 10 to 55 weight percent of the diglycidyl ether of bisphenol A, and C) from 1 to 10 weight percent of the compound containing at least one primary or secondary amino group and at least one aliphatic hydroxyl group, preferably diethanol amine.

9. Use of the powder coating composition of any of Claims 1 to 8 for coating a substrate.

10. A substrate having on at least one surface thereof the cured coating composition of any of Claims 1 to 8.

**Patentansprüche**

1. Beschichtungszusammensetzung enthaltend
(a) ein festes, multifunktionelles Epoxyharz der Formel I

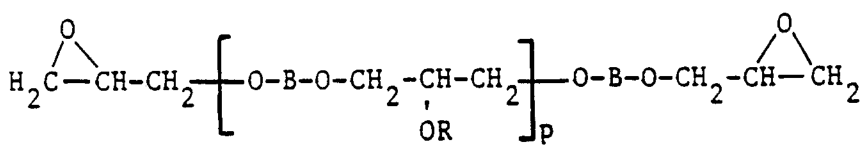

(I);

in der R unabhängig bei jedem Auftreten Wasserstoff oder eine Gruppe der Formel II ist

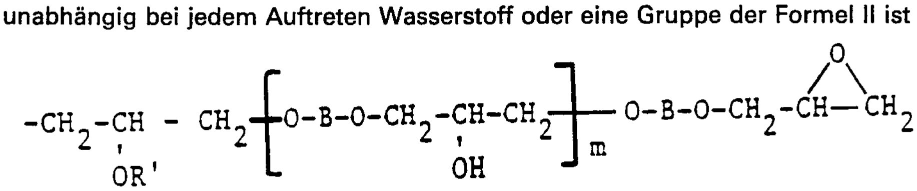

(II);

wobei R' die Bedeutung von R hat, jedes B unabhängig ein aliphatischer Alkylenrest oder ein Rest der Formel

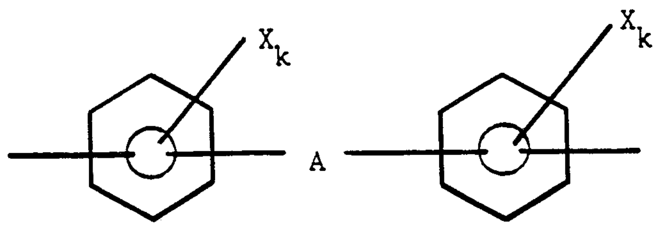

(VII);

oder ein Polyglycolrest mit einem zahlenmittleren Molekulargewicht von 100 bis 4000 ist, unter der Bedingung, daß mindestens ein Teil der Reste B Reste der Formel VII sind, jedes A ist unabhängig bie jedem Auftreten eine zweiwertige Kohlenwasserstoffgruppe mit 1 bis 8 Kohlenstoffatomen, —CO—, —O—, —S—, —S—S—, —$S(O)_2$—, —S(O)— oder eine kovalente Bindung, X ist unabhängig bei jedem Auftreten Wasserstoff, Halogen oder eine Alkylgruppe mit 1 bis 4 Kohlenstoffatomen, p hat einen Mittelwert von größer 0 bis 20, m hat einen Mittelwert von 0 bis 20 und k ist eine positive Zahl von 1 bis 4, unter der Bedingung, daß die mittlere Epoxyfunktionalität pro Molekül des Epoxyharzes größer als 2 und das Epoxyharz fest ist, oder

(b) eine Mischung von unterschiedlichen Epoxyharzender Formel I,

(c) ein festes Härtungsmittel für Epoxyharze, dadurch gekennzeichnet, daß die Zusammensetzung eine Pulverbeschichtungszusammensetzung ist.

2. Zusammenzetzung nach Anspruch 1, dadurch gekennzeichnet, daß Epoxyharz ein festes, multifunktionelles Harz der Formel I ist, in der mindestens en Teil der Reste B die Formel

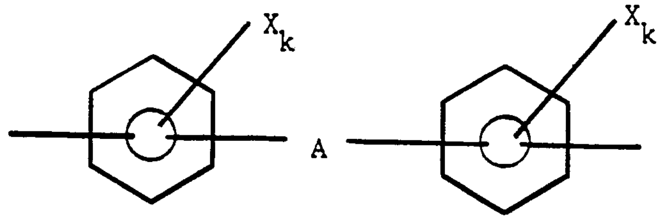

(VII);

aufweist, in der A unabhängig bei jedem Auftreten eine zweiwertige Kohlenwasserstoffgruppe mit 1 bis 6 Kohlenstoffatomen ist, X unabhängig bei jedem Auftreten Wasserstoff, Brom oder Chlor ist, k eine positive Zahl von 1 bis 4 ist und das Epoxyharz eine mittlere Epoxyfunktionalität pro Molekül von 2,1 bis 5,0 hat.

3. Zusammenzetzung nach Anspruch 2, dadurch gekennzeichnet, daß das Epoxyharz ein multifunktionelles Harz der Formel I ist, wobei in den Resten B jedes A ein 2-Propylidenrest ist und X bei jedem Auftreten Wasserstoff ist und das Epoxyharz eine mittlere Epoxyfunktionalität von 2,3 bis 3,5 hat.

4. Zusammenzetzung nach jedem der Ansprüche 1 bis 3, dadurch gekennzeichnet, daß das feste, multifunktionelle Epoxyharz ein Epoxyharz ist, das in Gegenwart eine Alkaliverbindung, vorzugsweise einer Lithium- oder Cäsiumverbindung, verzweigt wurde.

5. Zusammenzetzung nach jedem der Ansprüche 1 bis 4, dadurch gekennzeichnet, daß das feste Härtungsmittel für das Epoxyharz das Reaktionsprodukt von A) einem Überschuß einer phenolischen Verbindung mit im Mittel mehr als einer phenolischen —OH—Gruppe pro Molekül mit B) einer Epoxyverbindung mit im Mittel als einer 1,2-Epoxygruppe pro Molekül ist.

6. Zusammenzetzung nach jedem der Ansprüche 1 bis 4, dadurch gekennzeichnet, daß das feste Härtungsmittel für das Epoxyharz das Reaktionsprodukt von A) einer phenolischen Verbindung mit im Mittel mehr als einer phenolischen —OH—Gruppe, B) einer Epoxyverbindung mit im Mittel mehr als einer 1,2-Epoxygruppe und C) einer Verbindung, die mindestens eine primäre oder sekundare Aminogruppe und mindestens eine aliphatische Hydroxylgruppe aufweist, ist, wobei das Reaktionsprodukt enständige aliphatische —OH—Gruppen und phenolische —OH—Gruppen aufweist.

7. Zusammenzetzung nach Anspruch 6, dadurch gekennzeichnet, daß das feste Härtungsmittel hergestellt wird durch Umsetzen jedes Äquivalents der Epoxyverbindung mit 0,03 bis 0,8 Äquivalenten einer Verbindung C), die mindestens eine primäre oder sekundäre Aminogruppe und mindestens eine aliphatische Hydroxylgruppe aufweist, und Verwenden von mindestens 1,2 Äquivalenten einer phenolischen Verbindung A) für jedes Äquivalent der Epoxyverbindung B) in Überschuß gegenüber der stöchiometrisch erforderlichen Menge zum Umsetzen mit den Aminowasserstoffen der Verbindung C).

8. Zusammenzetzung nach Anspruch 6 oder 7, dadurch gekennzeichnet, daß das feste Härtungsmittel das Reaktionsprodukt ist von A) 90 bis 35 Gew.-% Bisphenol A, B) 10 bis 55 Gew.-% des Diglycidylethers von Bisphenol A und C) 1 bis 10 Gew.-% der Verbindung, die mindestens eine primäre oder sekundäre Aminogruppe und mindestens eine aliphatische Hydroxylgruppe aufweist, vorzugsweise Diethanolamin.

9. Verwendung der Pulverbeschichtungszusammensetzung nach jedem der Ansprüche 1 bis 8 zum Beschichten von Trägermaterial.

10. Trägermaterial, das mindestens auf einer Oberfläche eine gehärtete Beschichtungszusammensetzung nach jedem der Ansprüche 1 bis 8 aufweist.

**Revendications**

1. Une composition de revêtement comprenant

(a) une résine époxy multifonctionnelle solide de la formule I

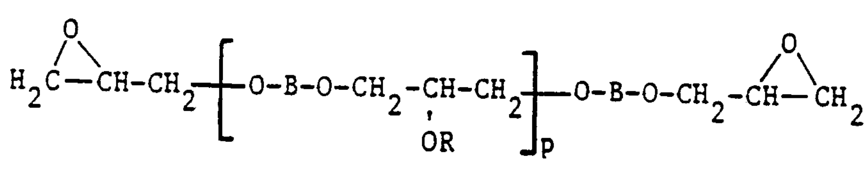

(I);

où R est indépendamment, dans chaque cas, hydrogène ou un groupe de la formule II

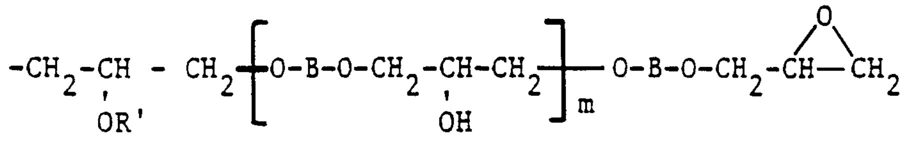

(II);

R' a la signification de R; chaque B est indépendamment un radical alkylène aliphatique, un radical de la formule

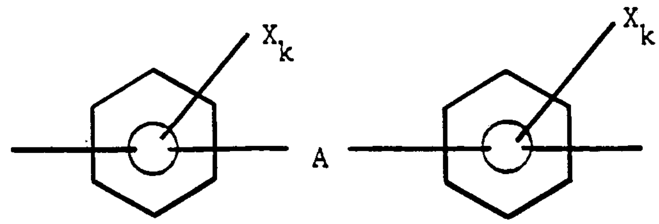

(VII);

ou un radical polyglycol d'une masse moléculaire moyenne en nombre comprise entre 100 et 4000; à la condition qu'au moins une parties des radicaux B soit constituée par des radicaux de la formule VII; chaque A est indépendamment, dans chaque cas, un groupe hydrocarboné divalent ayant 1 à 8 atomes de carbone, —CO—, —O—, —S—, —S—S—, —$S(O)_2$—, —S(O)— ou une liaison covalente; X est indépendamment, dans chaque cas, hydrogène, halogène ou un groupe alkyle ayant de 1 à 4 atomes de carbone; p a une valeur moyenne supérieure à 0 et allant jusqu'à 20, m a une valeur moyenne de 0 jusqu'à 20 et k est un nombre positif de 1 à 4; à la condition que la fonctionnalité époxyde moyenne par molécule de la résine époxy soit supérieure à 2 et que la résine époxy soit solide, ou

(b) un mélange de différentes résines époxy de la formule I;

(c) un agent de durcissement solide pour la résine époxy, caractérisée par le fait que la composition est une composition de revêtement par poudre.

2. La composition de la revendication 1, dans laquelle la résine époxy est un résine multifonctionnelle solide de la formule I, dans laquelle au moins une partie des radicaux B est représentée par la formule

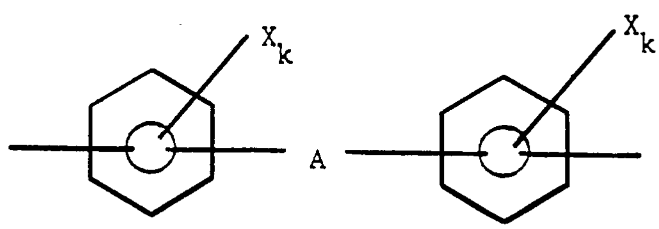

(VII);

où A est indépendamment, dans chaque cas, un groupe hydrocarboné divalent ayant de 1 à 6 atomes de carbone; X est indépendamment, dans chaque cas, hydrogène, brome ou chlore, k est un nombre positif de 1 à 4 et la résine époxy a une fonctionnalité époxyde moyenne par molécule de 2,1 à 5,0.

3. La composition de la revendication 2, dans laquelle la résine époxy est une résine multifonctionnelle de la formule I, dans laquelle, dans les radicaux B, chaque A est un radical 2-propylidène et X est, dans chaque cas, hydrogène et la résine époxy a une fonctionnalité époxyde moyenne de 2,3 à 3,5.

4. La composition de l'une quelconque, des revendications 1 à 3, dans laquelle la résine époxy multifonctionnelle solide est une résiné époxy qui a été ramifiée en présence d'un composé alcalin, de préférence un composé du lithium ou du césium.

5. La composition de l'une quelconque des revendications 1 à 4, dans laquelle l'agent de durcissement solide pour la résine époxy est le produit de la réaction de A) un excès d'un composé phénolique ayant, en moyenne, plus d'un groupe —OH phénolique par molécule avec B) un composé époxy ayant, en moyenne, plus d'un groupe 1,2-époxy par molécule.

6. La composition de l'une quelconque des revendications 1 à 4, dans laquelle l'agent de durcissement solide pour la résine époxy est le produit de la réaction de A) un composé phénolique ayant, en moyenne, plus d'un groupe —OH phénolique, B) un composé époxy ayant, en moyenne, plus d'un groupe 1,2-époxy et C) un composé contenant au moins un groupe amino primaire ou secondaire et au moins un groupe hydroxyle aliphatique, ledit produit de réaction ayant des groupes —OH phénoliques et des groupes —OH aliphatiques terminaux.

7. La composition de la revendication 6, dans laquelle l'agent de durcissement solide est prépare par réaction avec chaque équivalent du composé époxy de 0,03 à 0,8 équivalent d'un composé C) contenant au moins un groupe amino primaire ou secondaire et au moins une groupe hydroxyle aliphatique, et en utilisant au moins 1,2 équivalent d'un composé phénolique A), pour chaque équivalent du composé époxy B) en excés de la quantité stoechiométrique requise pour la réaction avec les hydrogènes d'amino du composé C).

8. La composition de la revendication 6 ou 7, dans laquelle l'agent de durcissement solide ets le produit de réaction de A) de 90 à 35 pour cent en poids de bisphénol A, B) de 10 à 55 pour cent en poids du diglycidyléther de bisphénol A, et C) de 1 à 10 pour cent en poids du composé contenant au moins un groupe amino primaire ou secondaire et au moins un groupe hydroxyle aliphatique, de préférence de la diéthanolamine.

9. Utilisation de la composition de revêtement par poudre de l'une quelconque des revendications 1 à 8 pour le revêtement d'un substrat.

10. Un substrat ayant sur au moins une surface de celui-ci la composition de revêtement durcie de l'une quelconque des revendications 1 à 8.